Europäisches Patentamt
European Patent Office
Office européen des brevets

(11) Veröffentlichungsnummer: **0 074 619 A1**

# EUROPÄISCHE PATENTANMELDUNG

(21) Anmeldenummer: 82108305.2

(22) Anmeldetag: 09.09.82

(51) Int. Cl.[3]: C 08 G 65/32
C 10 G 33/04

(30) Priorität: 12.09.81 DE 3136213

(43) Veröffentlichungstag der Anmeldung: 23.03.83 Patentblatt 83/12

(84) Benannte Vertragsstaaten: DE FR GB NL

(71) Anmelder: HOECHST AKTIENGESELLSCHAFT
Postfach 80 03 20
D-6230 Frankfurt/Main 80(DE)

(72) Erfinder: Diery, Helmut, Dr.
Theresenstrasse 45
D-6233 Kelkheim (Taunus)(DE)

(72) Erfinder: Mees, Bernhard, Dr.
Crooked Oak Lane 4700
Charlotte North Carolina 28211(US)

## (54) Bisester aus Alkenylbernsteinsäuren und Ethylenoxid-Propylenoxid-Blockpolymerisaten und deren Verwendung.

(57) Neue Bisester aus Alkenylbernsteinsäuren und Ethylenoxid-Propylenoxid-Blockpolymerisaten die erhalten werden durch Umsetzung von Alkenylbernsteinsäure-Anhydrid der Formel 1

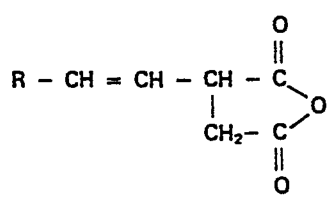

(1)

worin R verzweigtes oder unverzweigtes $C_2$-$C_{20}$-Alkyl bedeutet mit einem Ethylenoxid-Propylenoxid-Blockpolymerisat der Formel 2

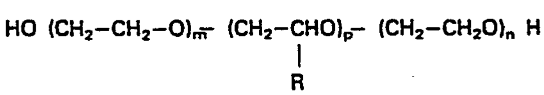

worin R Methyl oder Ethyl bedeutet, n und m Zahlen sind, die so gewählt sind, daß der Polyethylenoxidanteil 5 bis 80 % des Molekulargewichts des Gesamtmoleküls beträgt und p ist eine Zahl von 10 bis 70 und deren Verwendung als Demulgatoren für Öl-Wasser Emulsionen als Korrosionsschutzmittel und als Dispergatoren für Farbstoffe.

EP 0 074 619 A1

HOECHST AKTIENGESELLSCHAFT HOE 81/F 248 0074619

# Bisester aus Alkenylbernsteinsäuren und Ethylenoxid-Propylenoxid-Blockpolymerisaten und deren Verwendung

Derivate von Alkenylbernsteinsäuren sind Hilfsmittel mit wertvollen Eigenschaften und vielfältigen Einsatzgebieten. Man erhält sie durch Umsetzung von α-Olefinen mit Maleinsäureanhydrid bei Temperaturen von ca. 200°C. Die so erhaltenen Alkenylbernsteinsäureanhydride können dann nach an sich bekannten Reaktionen weiter derivatisiert werden. So kann man beispielsweise mit Kaliumhydroxid zum Kaliumsalz hydrolysieren, welches als Solubilisierungsmittel für flüssige Reinigungsmittel eingesetzt wird. Alkenylbernsteinsäureanhydride kann man in das Triäthanolammoniumsalz überführen, welches gute Korrosionsschutzeigenschaften zeigt. Ebenso sind bekannt Umsetzungen von Alkenylbernsteinsäureanhydriden mit Fettalkoholen zu den entsprechenden Estern, die als Schmiermittel eingesetzt werden.
Bei all diesen Derivaten werden also Alkenylbernsteinsäureanhydride mit niedermolekularen Verbindungen umgesetzt.

Die vorliegende Erfindung beschreibt nun neuartige Umsetzungsprodukte von Alkenylbernsteinsäuren oder -anhydriden.

Gegenstand der Erfindung sind neue Bisester aus Alkenylbernsteinsäuren und Ethylenoxid-Propylenoxid-Blockpolymerisaten die erhalten werden durch Umsetzung von Alkenylbernsteinsäure-Anhydriden der Formel 1

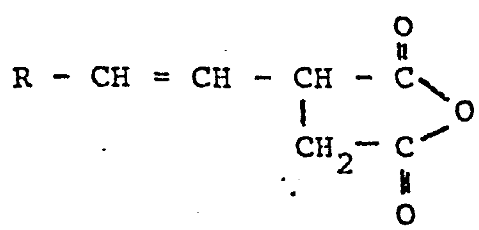

worin R verzweigtes oder unverzweigtes $C_2$-$C_{20}$-Alkyl bedeutet mit einem Ethylenoxid-Propylenoxid-Blockpolymerisat der Formel 2

$$HO(CH_2-CH_2-O)_m - (CH_2-\underset{\displaystyle R}{\underset{|}{C}}HO)_p - (CH_2-CH_2O)_n\,H \quad (2)$$

worin R Methyl oder Ethyl bedeutet, n und m Zahlen sind, die so gewählt sind, daß der Polyethylenoxidanteil 5 bis 80 % des Molekulargewichts des Gesamtmoleküls beträgt und p ist eine Zahl von 10 bis 70.

Wie schon erwähnt, erhält man die Alkenylbernsteinsäureanhydride durch Umsetzung von α-Olefinen mit Maleinsäureanhydrid bei Temperaturen von 200°C. Anstelle des Alkenylbernsteinsäureanhydrids der obigen Formel 1 kann man ebenso auch von der freien Säure ausgehen. Die niederen α-Olefine wie Buten, Penten, Hexen etc. müssen im Autoklaven umgesetzt werden, während die höheren Olefine ab Hexadecen im offenen Gefäß umgesetzt werden können. Für die Reaktion können neben linearen α-Olefinen auch verzweigte eingesetzt werden, wie beispielsweise Tripropylen (i-Nonen) oder Tetrapropylen (i-Dodecen.)

Als Ethylenoxid-Propylenoxid-Blockpolymerisate werden solche Produkte eingesetzt, die durch Oxethylierung eines Polypropylenoxids mit einem Molgewicht von mindestens 600 hergestellt werden. Vorzugsweise geht man aus von einem Polypropylenoxid mit einem Molgewicht von 1000 bis 3500. Das Propylenoxid kann auch teilweise durch Butylenoxid ersetzt werden. Der Anteil der Polyethylenoxidgruppen am Gesamtmolekül des Blockpolymers wird so gewählt, daß er mindestens 5 %, beovzrugt 10 - 80 %, ausmacht.

Die Umsetzung der Alkenylbernsteinsäureanhydride mit den Ethylenoxid-Propylenoxid-Blockpolymerisaten erfolgt in 2

Stufen. Die 1. Stufe, d.h. die Monoveresterung, erfolgt bei Temperaturen von 50 - 100°C, vorzugsweise 80 - 120°C. Die 2. Stufe, d.h. die Veresterung der freien Carbonsäure mit noch freien OH-Gruppen des Blockpolymerisats - wobei Vernetzung erfolgt - , wird bei Temperaturen von 160 - 260°C, vorzugsweise Temperaturen von 190 - 240°C durchgeführt.

Das Molverhältnis des Alkenylbernsteinsäureanhydrid zu dem Blockpolymerisat liegt in der Regel bei etwa 1:1, Abweichungen in Richtung auf 0,5:1 sind möglich und in besonderen Fällen erwünscht. Man verfährt bei der Veresterung so, daß das Anhydrid und das Blockpolymerisat vorgelegt und zusammen unter Rühren hochgeheizt werden. Da in der 2. Stufe Wasser abdestilliert werden muß, empfiehlt es sich, diese Veresterung unter leichtem Stickstoffstrom durchzuführen, da so die Entfernung des Wassers leichter gelingt. Die Reaktion wird solange durchgeführt, bis eine Säurezahl unter 7 resultiert.

Die so erhaltenen Produkte eignen sich sehr gut als Spalter von Emulsionen aus Wasser und Erdöl, als Korrosionsschutzmittel und als Dispergatoren von Farbstoffen.

Die folgenden Beispiele sollen die Erfindung erläutern, ohne sie jedoch einzuschränken.

Beispiel 1

In einem 1 Liter Gefäß mit Ankerrührer , Innenthermometer und Kurzwegdestillationsaufsatz werden 287 Gewichtsteile eines Blockpolymerisates mit einem Polypropylenoxid-Block vom Molgewicht 1750 und 40 % Polyethylenoxid im Gesamtmolekül (Handelsname ®Pluriol PE 6400) mit 21,2 Gewichtsteilen i-Nonenylbernsteinsäureanhydrid eingefüllt und auf 90°C geheizt. Man hält 4 Stunden bei dieser Temperatur und heizt dann weiter

auf 240°C. Anschließend läßt man 18 Stunden bei dieser Temperatur reagieren, wobei das Reaktionswasser durch Anlegen eines leichten Stickstoffstromes abdestilliert wird. Ist eine Säurezahl von < 7 erreicht, so wird abgekühlt. Man erhält eine viskose, braune Flüssigkeit.

Beispiel 2

Man verfährt entsprechend dem Beispiel 1, setzt jedoch anstelle von i-Nonenylbernsteinsäureanhydrid 15,4 Gewichtsteile n-Butenylbernsteinsäureanhydrid ein. Nach 4 Stunden bei 80°C wird noch 16 Stunden auf 240° gehalten, wobei eine Säurezahl von 6 im Endprodukt resultiert.

Beispiel 3

In einem 1 Liter Rührgefäß, ausgerüstet wie in Beispiel 1 werden 400 Gewichtsteile eines Blockpolymerisates mit einem Polypropylenblock mit einem Molgewicht von 1.750 und 80 % Polyethylenoxid im Gesamtmolekül (®Pluriol PE 6800) mit 10 Gewichtsteilen n-Octenylbernsteinsäureanhydrid vermischt und zunächst wieder bei 90° in 3 Stunden monoverestert. Die 2. Stufe der Veresterung erfolgt in 7 Stunden bei 200°C. Die Säurezahl liegt dann bei 6. Das viskose braune Produkt hat einen Trübungspunkt von 97°C.

Beispiel 4

In einem 1 Liter Rührgefäß gemäß Beispiel 1 werden 230 Gewichtsteile eines Blockpolymerisates mit einem Polypropylenblock mit einem Molgewicht von 950 und einem Polyäthylenanteil von 10 % im Gesamtmolekül ( ®Pluriol PE 3100) zusammen mit 50 Gewichtsteilen i-Dodecenylbernsteinsäureanhydrid verestert. Nach 25 Stunden bei 220° hat man eine Säurezahl von 7 erreicht. Das Produkt ist noch gießbar und zeigt eine hellbraune Farbe.

0074619

Beispiel 5

In einem 1 Liter Rührgefäß gemäß Beispiel 1 werden 288 Gewichtsteile eines Blockpolymerisats mit einem Polypropylen-Block mit einem Molgewicht von 1750 und einem Polyethylenanteil von 40 % im Gesamtmolekül (® Pluriol PE 6800) zusammen mit 40 Gewichtsteilen n-Hexadecenylbernsteinsäureanhydrid verestert. Nach 16 Stunden bei 230°C liegt die Säurezahl der sehr viskosen, braunen Flüssigkeit bei 6,8.

PATENTANSPRÜCHE:

1. Bisester aus Alkenylbernsteinsäuren und Ethylenoxid-Propylenoxid-Blockpolymerisaten erhalten durch Umsetzung von Alkenylbernsteinsäure-Anhydrid der Formel 1

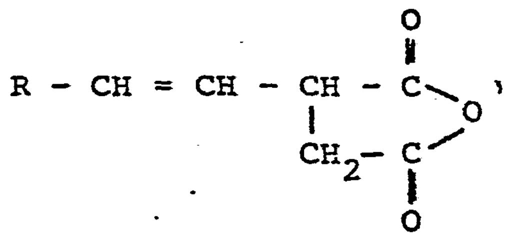

(1)

worin R verzweigtes oder unverzweigtes $C_2$-$C_{20}$-Alkyl bedeutet mit einem Ethylenoxid-Propylenoxid-Blockpolymerisat der Formel 2

$$HO(CH_2-CH_2-O)_m-(CH_2-\underset{R}{\underset{|}{C}}HO)_p-(CH_2-CH_2O)_n\,H \quad (2)$$

worin R Methyl oder Ethyl bedeutet, n und m Zahlen sind, die so gewählt sind, daß der Polyethylenoxidanteil 5 bis 80 % des Molekulargewichts des Blockpolymerisat-Gesamtmoleküls beträgt und p ist eine Zahl von 10 bis 70.

2. Verwendung der Bis-ester nach Anspruch 1 als Demulgatoren für Öl-Wasser, Emulsionen als Korrosionsschutzmittel und als Dispergatoren für Farbstoffe.

Europäisches Patentamt

# EUROPÄISCHER RECHERCHENBERICHT

0074619

Nummer der Anmeldung

EP 82 10 8305

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | GB-A-2 008 146 (I.C.I.) * Ansprüche * | 1,2 | C 08 G 65/32<br>C 10 G 33/04 |
| A | US-A-3 968 310 (JAMES K. STOWELL) * Ansprüche * | 1 | |
| A | DE-B-1 595 370 (BASF) * Ansprüche * | 1 | |
| A | DE-A-2 540 173 (BASF) * Ansprüche * | 1 | |
| A | US-A-2 561 232 (HARRY W. RUDEL et al.) * Ansprüche * | 1 | |
| | | | RECHERCHIERTE SACHGEBIETE (Int. Cl. ³) |
| | | | C 08 G<br>C 10 G<br>E 21 B |

Der vorliegende Recherchenbericht wurde für alle Patentansprüche erstellt.

| Recherchenort | Abschlußdatum der Recherche | Prüfer |
|---|---|---|
| DEN HAAG | 13-12-1982 | MALHERBE Y.J.M. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82